**Europäisches Patentamt**

**European Patent Office**

**Office européen des brevets**

(19)

(11) Veröffentlichungsnummer: **0 019 214**
**B1**

(12) **EUROPÄISCHE PATENTSCHRIFT**

(45) Veröffentlichungstag der Patentschrift:
02.07.86

(21) Anmeldenummer: **80102521.4**

(22) Anmeldetag: **08.05.80**

(51) Int. Cl.⁴: **C 08 G 18/64,** C 08 G 18/30,
C 02 F 11/00, C 12 N 11/08

(54) **Verwendung von reaktiven, organischen Füllstoffen zur Herstellung von Polyurethankunststoffen.**

(30) Priorität: **21.05.79 DE 2920527**

(43) Veröffentlichungstag der Anmeldung:
**26.11.80 Patentblatt 80/24**

(45) Bekanntmachung des Hinweises auf die Patenterteilung:
**02.07.86 Patentblatt 86/27**

(84) Benannte Vertragsstaaten:
**BE DE FR GB IT NL**

(56) Entgegenhaltungen:
**EP-A-0 010 243
DE-A-2 208 644
DE-A-2 410 693
DE-A-2 413 137
FR-A-2 314 195
FR-A-2 314 196
US-A-3 976 465
US-A-4 021 368**

(73) Patentinhaber: **BAYER AG, Konzernverwaltung RP
Patentabteilung, D-5090 Leverkusen 1 Bayerwerk
(DE)**

(72) Erfinder: **Reischl, Artur, Dr., H.T.- von- Böttinger-
Strasse 19, D-5090 Leverkusen 1 (DE)**
Erfinder: **Wagner, Kuno, Dr., Am Kiesberg 8,
D-5090 Leverkusen 1 (DE)**

LIBER, STOCKHOLM 1986

## Beschreibung

Die Erfindung betrifft ein Verfahren zur Herstellung von gegebenenfalls verschäumten Polyurethankunststoffen, insbesondere Formkörpern, unter Verwendung von bestimmten denaturierten Biomassen als reaktive Füllstoffe. Bei den Füllstoffen handelt es sich um Biomassen auf Basis von Mikroorganismen sowie deren Folge- und Zersetzungsprodukten, insbesondere um biologische Klärschlämme, welche durch Umsetzung mit Isocyanaten geruchsfrei gemacht und irreversibel denaturiert wurden.

In biologischen Kläranlagen werden organischchemische Abwasserverunreinigungen mit Hilfe von Mikroorganismen abgebaut, d.h. biologisch eliminiert.

Unter den dabei angewandten Bedingungen erfolgt eine besonders starke mikrobielle Vermehrung, so daß die Menge der hauptsächlich aus Bakterien bestehenden Biomassen in den sogenannten Belebtschlammbecken der Kläranlagen täglich um etwa 3 - 4 Gew.-% zunimmt, so daß trotz Absterbens eines Teils der Mikroorganismen eine Verdoppelung der Bakterienmenge innerhalb von 3 - 4 Wochen eintritt. Ein Teil der Biomasse muß daher kontinuierlich den Belebtschlammbecken als Überschußschlamm entnommen werden, um die optimalen Bedingungen der mikrobiellen Abwasserreinigung aufrecht zu erhalten. Deshalb fallen bei der vollbiologischen Reinigung industrieller und kommunaler Abwässer weltweit Biomassen in außerordentlich großen und stets steigenden Mengen an. Allein in der BRD werden zur Zeit jährlich bereits ca. 2 Millionen Tonnen (berechnet als Trockengewicht) solcher proteinhaltigen Biomassen entweder in Deponien abgeladen oder verbrannt. Die dafür erforderliche Entfernung des Wassers aus den Belebtschlämmen ist auch heute noch problematisch, da unter den in den Kläranlagen in der Praxis üblichen Sedimentationsbedingungen der abzuführende Belebtschlamm nur etwa 1 Gewichtsprozent an mikrobieller Trockenmasse enthält. In einfachen Zentrifugen läßt sich der Feststoffgehalt des Schlamms nur auf 7 - 9 Gew.-% konzentrieren und auch durch Zugabe von Polyelektrolyten und Verwendung von Zentrifugen und Dekantern lediglich auf 12 - 15 Gew.-% steigern.

Die Belebtschlämme haben schon bei diesen niedrigen Konzentrationen wegen der starken chemisten und physikalischen Bindung des Wasser an die Mikroorganismen eine ausgeprägte Gelstruktur und verhältnismäßig hohe Viskosität. Deshalb ist eine übliche Filtration ohne spezielle Behandlung unmöglich. Die Filtration wird auch dadurch erschwert, daß die Bakterienzellen einander anziehen und gemeinsame schleimige Hüllen ausbilden, wobei klebrige Flocken entstehen.

Ein weiteres Problem besteht darin, daß der Bakterien-Überschußschlamm, sobald er vom Klärbecken isoliert ist, sofort zu faulen beginnt und einen unerträglichen Geruch verbreitet. Sogar wasserfreies, bei 110°C getrocknetes Belebtschlamm-Pulver besitzt einen sehr unangenehmen Geruch und fault im feucht gewordenen Zustand weiter aus. Auch die Anwesenheit von pathogenen Keimen ist nicht auszuschließen.

Die Kompostierung des Klärschlamms oder seine direkte Ausbringung als Düngemittel in der Landwirtschaft sind aus diesen Gründen nur in eng begrenztem Rahmen möglich. Schon jetzt ist also die Beseitigung bzw. Verwertung von Klärschlämmen ein großes ökologisches Problem, welches trotz vieler Anstrengungen bisher nicht zufriedenstellend gelöst werden konnte.

Die FR A 2 314 195 beschreibt die Umsetzung von aminogruppenhaltigen Proteinen, Coenzymen und ähnlichen Verbindungen mit (überschüssigen) NCO-Prepolymeren und weitere Umsetzung dieses "modifizierten NCO-Prepolymers" mit Kettenverlängerungsmitteln zu Polyurethanen. Das biologische Material (Proteine, Enzyme etc.) wird aufgrund seiner Verbindung über Isocyanatgruppen mit dem Polyurethanträger unbeweglich (immobilisiert), behält jedoch seine biologische Aktivität, so daß es für eine Vielzahl chemischer und biochemischer Zwecke brauchbar ist.

Die DE-Y 2 208 644 beschreibt lediglich ein Verfahren zum Aufbereiten und Verfestigen von schleimigem Sondermüll, einschließlich Klärschlämmen, bei dem den Sondermüllarten organische Isocyanate (wie Toluylendiisocyanat, 4,4'-Diphenylmethandiisocyanat oder carbodiimisierte Diphenylmethandiisocyanate) zugemischt werden. Die anfallenden festen oder schaumstoffartigen Produkte lassen sich in dieser Form in Verbrennungsöfen gut beseitigen. Die Verwendung als Füllstoffe zur Herstellung von gegebenenfalls zellförmigen Polyurethankunststoffen ist weder beschrieben, noch nahegelegt.

Von der Anmelderin wurden zwei neue Verfahren entwickelt, welche in überraschend einfacher und wirtschaftlicher Weise die Aufarbeitung verschiedenster Biomassen auf Basis von Mikroorganismen bzw. deren Stoffwechsel- und/ oder Zersetzungsprodukten, insbesondere auch der oben beschriebenen Klärschlämme aus biologisch arbeitenden Kläranlagen, ermöglichen (diese Aufarbeitungsverfahren sind Gegenstand getrennter Patentbegehren EP-A 10 243 und EP-A 19 125 und werden in der vorliegenden Anmeldung nicht beansprucht). Unter "aufarbeiten" ist in diesem Zusammenhang vor allem zu verstehen, daß die Biomassen aufkonzentriert, irreversibel denaturiert, geruchsfrei gemacht und auf diese Weise für eine Verwertung in der Kunststoffindustrie geeignet werden.

Das erste dieser Verfahren besteht darin, daß man die Biomassen mit Carbonylverbindungen modifiziert. Beim anderen Verfahren (EP-A 19 215) setzt man

a) 5 bis 98 Gew.-%, bevorzugt 20 bis 97 Gew.-%, bezogen auf a) und b) einer Biomasse auf Basis von Mikroorganismen bzw. deren Folge- und Zersetzungsprodukten mit

b) 95 bis 2 Gew.-%, bevorzugt 80 bis 3 Gew.-%, bezogen auf a) und b), einer Isocyanatgruppen aufweisenden Verbindung, gegebenenfalls in Gegenwart von

c) Wasser und/oder einem organischen Lösungsmittel sowie gegebenenfalls in Gegenwart von

d) organischen und/oder anorganischen Zusatzstoffen, bei Temperaturen oberhalb 50°C, vorzugsweise 50 bis 200°'C, besonders bevorzugt 80 bis 150°C, unter vollständiger Denaturierung um.

Die nach dem genannten Verfahren aufgearbeiteten Biomassen sind steril, in den meisten Fällen völlig geruchlos und denaturiert; die Produkte verkleben in wäßriger Phase nicht, sind ohne Komplikationen filtrierbar und lassen sich in energiesparender Weise trocknen. Sie sind völlig lagerbeständig und frei von pathogenen Krankheitserregern. Bedingt durch totale Enzymdesaktivierung und vollständigen Zelltod der Biomassen werden Zersetzungs- bzw. Fäulnisvorgänge, Gärungen und unangenehme Geruchsbildungen von enzymatisch oder mikrobiologisch abbaubaren Zellinhaltsstoffen vollständig unterbunden.

Die Verfahrensprodukte sind daher bei beliebig langen Lagerzeiten in trockenem und auch in feuchtem Zustand bezüglich unangenehmer Geruchsbildung und weiterem enzymatischen Abbau vollständig stabilisiert und können problemlos zu einem beliebigen Zeitpunkt als Füllstoffe bei der Herstellung von Polyurethankunststoffen eingesetzt werden.

Gegenstand der vorliegenden Erfindung ist somit die Verwendung von reaktiven organischen Füllstoffen bei der Herstellung von gegebenenfalls zellförmigen Polyurethankunststoffen durch Polyaddition von

A) Polyisocyanaten

B) niedermolekularen und/oder höhermolekularen Verbindungen mit gegenüber Isocyanaten reaktiven Wasserstoffatomen, in Gegenwart von

C) reaktiven, organischen Füllstoffen sowie gegebenenfalls

D) Treibmitteln, Katalysatoren und weiteren an sich bekannten Zusatzstoffen,

dadurch gekennzeichnet, daß

als Komponente C) Biomassen auf Basis von Mikroorganismen sowie deren Folge- bzw. Zersetzungsprodukte, die in einem getrennten Schritt durch Umsetzung mit Isocyanaten denaturiert wurden, erst in irreversibel denaturierter und geruchsfrei gemachter, modifizierter Form als Füllstoffe verwendet werden,

und als Komponente B) niedermolekulare Verbindungen mit mindestens 2, gegenüber Isocyanaten reaktionsfähigen Wasserstoffatomen und einem Molekulargewicht von 32 - 400 und/oder höhermolekulare Verbindungen, mit 2 - 8, gegenüber Isocyanaten reaktionsfähigen Wasserstoffatomen, vom Molekulargewicht 500 - 8.000, eingesetzt werden.

## I) Herstellung der erfindungsgemäß einzusetzenden reaktiven Füllstoffe

## (1) Ausgangsmaterialien

Unter "Biomassen" sind im Rahmen der vorliegenden Erfindung alle sich im Teilungszustand, Ruhezustand, partiellen oder vollständigen Zelltod, oder bereits in der enzymatischen Zersetzung oder in der Zersetzung durch Fremdkulturen befindlichen Biosysteme aus Mikroorganismen, wie Prokaryonten und Eukaryonten, z.B. Bakterien, Hefen, Protozoen und anderen Einzellern, Pilzen, Algen usw. zu verstehen.

Beispiele hierfür sind

- Biomassen aus Mikroorganismen von biologisch arbeitenden Kläranlagen.

- Biomassen, wie sie anfallen

a) bei Verfahren zur Gewinnung von Produkten des primären Stoffwechsels, also zum Beispiel bei der biotechnischen Herstellung von Ethanol, Butanol, Aceton, Zitronensäure, Milchsäure, Weinsäure, einfachen aliphatischen Carbonsäuren, Aminosäuren usw.,

b) bei technischen Fermentationsprozessen zur Herstellung von Produkten des sekundären Stoffwechsels, zum Beispiel bei der Gewinnung von Antibiotika, Vitaminen, Wuchsstoffen, Steroidhormonen, Alkaloiden usw.,

c) bei Verfahren zur Gewinnung von Zellbestandteilen, wie Enzymen, Nucleinsäuren oder Polysacchariden, und

d) bei Verfahren zur Gewinnung von Hefen, z.B. zum Backen, zur alkoholischen Gärung oder zur Proteingewinnung aus Methan, Erdöl und Methanol.

- Biomassen, die bei Verfahren der Biotransformation anfallen, also bei Verfahren, bei denen Mikroorganismen als Katalysatoren organischchemischer Reaktionen, wie Oxidationen, Reduktionen, Decarboxylierungen, Phosphorylierungen, Aminierungen, Desaminierungen, Acetylierungen, Desacetylierungen usw. verwendet werden.

Für die Herstellung der erfindungsgemäß einzusetzenden Füllstoffe sind bevorzugt:

- Biomassen von biologisch arbeitenden Reinigungsanlagen von industriellen und kommunalen Abwässern. Derartige Biomassen bestehen aus zahlreichen Bakterien-, Algen- und Pilzarten, die optimal etwa bei einem P: N: C-Verhältnis von 1: 5: 100 arbeiten und als Omnivore (Allesfresser) zu bezeichnen sind. Die aus Kläranlagen stammenden Biomassen, die auch als Belebtschlämme bezeichnet werden, sind bei dem erfindungsgemäßen Verfahren auch dann verwendbar, wenn sie Spuren an Quecksilber-, Cadmium-, Zink-, Eisen-, Chrom- und/oder Bleiionen enthalten.

- Die verschiedensten Hefearten (Pilzarten) aus technischen Prozessen, zum Beispiel aus Fermentationsprozessen der alkoholischen Gärung.

- Biomassen aus Essig-, Milchsäure-, Zitronensäure- oder Weinsäure-Herstellung, ferner Bakterienkulturen, die infolge enzymatischer Prozesse vergären.

- Fehlpartien von Hefekulturen.

- Biomassen der Proteinherstellung auf der Grundlage verschiedener Kohlenwasserstoff-Quellen, wie Erdöl, Paraffinverschnitten, Methan oder Methanol. Speziell in Frage kommen hierbei Biomassen auf Basis spezieller Hefezellen aus großtechnischen Anlagen zur Erzeugung von Eiweiß aus Petroleumfraktionen und Fehlpartien derartiger Biomassen.

Besonders geeignet sind in diesem Zusammenhang auch aus bakteriellen Mischkulturen bestehende Biomassen auf Basis einzelliger Mikroorganismen. Ferner sind geeignet Biomassen aus Pseudomonas-Bakterien, die im Fermenter bei etwa 37°C gezüchtet werden und aus Methanol als Kohlenstoffquelle proteinreiche Futtermittel erzeugen können.

- Biomassen der Penicillin-Herstellung, z.B. Penicillium notatum und Penicillium chrysogenum.

- Biomassen aus der Endstufe der Tetracyclin-Herstellung (Streptomyceten), Biomassen aus fadenartigen Bakterien der Sisomycin-Herstellung (Micromonospora), sowie andere Streptomyces-Arten.

- Biomassen auf Basis verschiedenster anderer Bakterien und Pilze, wie sie im Detail in der älteren europäischen Patentanmeldung 79 10 38 32.6 beschrieben werden, und zahlreiche andere Biomassen mikrobieller Art, wie sie in der Literatur beschrieben sind (vgl. Synthesis 4, 120 - 134 und 147 - 157 (1969)). Diese Biomassen können aus Reinkulturen, aber selbstverständlich auch aus Mischkulturen, d.h. aus bei Fermentationsprozessen infizierten und daher unbrauchbaren Kulturen bestehen und z.B. auch in Mischung tote Zellen pflanzlicher Art oder Zellinhaltsstoffe wie Hemicellulosen enthalten.

- Algenarten, wie Blaualgen, Grünalgen (z.B. Chlorella), Kieselalgen, Jochalgen, Geißelalgen, Braunalgen und Rotalgen wie auch Protozoen.

- Mischkulturen der verschiedenartigsten Bakterien, Pilze und Algen, ebenso Kulturen von Biomassen, die mit andersartigen Pilzarten, Bakterienarten etc. infiziert sind und eine komplexe Zusammensetzung aufweisen. Beispielhaft genannt seien Mischkulturen, die sich an in Zersetzung befindlichen Trebern, Nährmedien wie Gelatine, Melassen, Stärken und anderen Polysacchariden an freier Luft und im feuchten Zustand sowie an proteinhaltigen, noch lebenden oder bereits in der Zersetzung befindlichen Algen ausbilden.

- Faul- und Bioschlämme der verschiedensten Art sowie Biomassen mit hohen Anteilen an Escherichia coli und/oder verschiedensten pflanzlichen Schwebstoffen.

- Biomassen anaerober Faulung (Intensiv-Faulung), Müll-Klärschlamm-Kompostierungsprodukte, zum Beispiel aus Verfahren der thermophilen Faulung (aerobthermophile Verfahren); ferner Produkte der aeroben Klärschlamm-Kompostierung nach dem System der Schnellrotte; weiterhin mikrobiell befallene Faserschlämme, Schlämme der Nahrungsund Genußmittel-Industrie, z.B. Schlämme aus Molkereien und Schlachthöfen, sowie bereits getrocknete und in Deponien befindliche Bioschlämme.

Für die Herstellung der im erfindungsgemäßen Verfahren zu verwendenden Füllstoffe können auch Gemische verschiedener Biomassen eingesetzt werden. Ferner ist das erfindungsgemäße Verfahren auch dann anwendbar, wenn die Biomassen verschiedenartigste Verunreinigungen enthalten, beispielsweise Schwermetallsalze, Pflanzenschutzmittel, Antibiotika oder andere organische oder anorganische Chemikalien.

Für das erfindungsgemäße Verfahren besonders bevorzugte Füllstoffe sind solche auf Basis der schon eingehend beschriebenen wäßrigen oder getrockneten pulverförmigen Belebtschlämme aus industriellen und kommunalen Kläranlagen. Diese besitzen keine definierte Zusammensetzung, sondern bestehen ja nach Abwasserverunreinigung und biologischen Bedigungen aus vielen Bakterienarten, Pilzen und Protozoen, von denen nur einige beispielhaft genannt seien: Aerobacter aerogenes, Gorynebacterium laevaniformas, Paracolobactrum aerogenoides, Escheria intermedium, Escheria faecale, Flavobakterien, Pseudomonas, Nitrosomonas- und Nitrobacterarten, sowie Shaerotilus natens und weiße Schwefelbakterien. Darüber hinaus sind auch Enzyme, Fermente und Algen anwesend.

Alle genannten Biomassen enthalten die verschiedenartigsten Verbindungen mit H-aciden Gruppen, welche mit Carbonylverbindungen, Aminoplastmonomeren bzw. mit Isocyanaten Polykondensations- bzw. Polyadditionsreaktionen eingehen können (siehe z.B. auch "Handbuch der Frischwasser- und Abwasserbiologie", Bd. II, S. 620 (1960) von H. Lübmann). Beispiele hierfür sind u.a. alle Proteine, z.B. Lipoproteine, Glykoproteide als Bestandteile von Enzymen, die Enzyme selbst, wie Glykoseoxidase, Katalase, Glukose-Isomerase, Invertase, Lactase, Naringinase, Lipasen, Asparaginasen, $\alpha$-Amylasen und Glykoamylasen, Cellulasen, Lysozyme, Proteasen usw.; Nucleoproteide, Ribonucleinsäuren und Desoxiribonucleinsäuren; Phosphatide, insbesondere Inositphosphatid, Colamin-kephalin und Serin-kephalin; Lipoide oder Plasmalogene, soweit sie als Base Colamin in Form eines Phosphorsäureesters gebunden enthalten; alle Zucker und polysaccharidartigen Zellreserve- und Zellinhaltsstoffe, Hemicellulosen, Stärken, Pektine und Lignine;

Bestandteile der Zellwände von Bakterien, beispielsweise Polymere von Aminozuckern (Acetylglukosamin + N-Acetylmuraminsäure), die im N-Acetylmuraminsäure-Anteil über Polypeptide vernetzt sind; Zellwandbestandteile von Pilzen und Algen, wie z.B. Cellulosen, Hemicellulosen und andere Polysaccharide und Chitinanteile mit Acetylglukosamin· bzw. Acetylgalaktosamin-Anteilen.

Bei den beschriebenen Denaturierungsverfahren für Biomassen arbeitet man bevorzugt in wäßrigem Medium oder in wäßrigalkoholischem Medium. Dabei können auch zusätzliche inerte organische Lösungsmittel mitverwendet werden; letztere dienen zur azeotropen Entfernung des Wassers nach beendeter Umsetzung. Vorzugsweise kommt jedoch Wasser ohne zusätzliche organische Lösungsmittel als Reaktionsmedium in Betracht.

Die Reaktionstemperaturen können innerhalb eines größeren Bereiches variiert werden. Im allgemeinen arbeitet man bei Temperaturen zwischen 0°C und 200°C, vorzugsweise zwischen 10°C und 150°C. Es ist jedoch auch möglich, die Mischkondensationsreaktion im Verlaufe des Trocknungsprozesses, z.B. bei der Sprühtrocknung, bei Temperaturen bis zu 250°C zu Ende zu führen. In vielen Fällen kann das Denaturierungsverfahren auch bevorzugt bei Raumtemperatur durchgeführt werden. Eventuell noch verbleibende pathogene Krankheitskeime können dabei in der Trocknungsphase durch Sterilisierung abgetötet werden.

Die Denaturierungsreaktion wird im allgemeinen unter Normaldruck ausgeführt. Es ist jedoch auch möglich, unter erhöhtem oder vermindertem Druck zu arbeiten. Zum Beispiel kann das Verfahren unter erhöhtem Druck bei Temperaturen zwischen 120°C und 160°C durchgeführt werden, wobei neben Sterilisation der Produkte auch ein gezielter Abbau von Proteinen, Ribonucleinsäuren, Desoxiribonucleinsäuren, Nucleoproteiden und/oder anderen Zellinhaltsstoffen erfolgt.

Der Nachweis dafür, daß bei dem Denaturierungsverfahren rasch und quantitativ eine Sterilisation der eingesetzten Biomassen erfolgt, kann in bekannter Weise in sterilen Agar und Peptone enthaltenden Petrischalen geführt werden, wobei diese primär zur Sterilisierung in üblicher Weise bei 120°C etwa 40 Minuten einer Dampfatmosphäre ausgesetzt werden. Messungen an derartig sterilisierten, mit den Verfahrensprodukten angeimpften Nährböden zeigen unter standardisierten Prüfbedingungen in gesättigter steriler Wasseratmosphäre sowohl nach 24 Stunden als auch nach 72 und mehr Stunden keine Keimbildung.

Sterilisationen der eingesetzten Biomassen lassen sich besonders vorteilhaft auch dadurch erreichen, daß man die Kondensation im Temperaturbereich von 10°C bis 140°C unter stark vermindertem Druck vornimmt. Hierdurch können Sterilisationen, Plasmolyse und Zellwandsprengung der Mikroorganismen, wie Bakterien, Algen, Hefen usw., außerordentlich beschleunigt werden.

### (2) Denaturierung mit Isocyanaten

Die erfindungsgemäß einzusetzenden Füllstoffe werden vorzugsweise durch Denaturierung der Biomassen mit Isocyanatgruppen aufweisenden Verbindungen erhalten, wobei als Denaturierungsmittel im Prinzip beliebige, nieder- oder hochmolekulare Mono- oder Polyisocyanate in Frage kommen, z.B. aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q \, (NCO)_n$$

in der

n = 2 - 4, vorzugsweise 2,

und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 5 - 10 C-Atomen, einen aromatischen Kohlenwasserstoffrest mit 6 - 15, vorzugsweise 6 - 13 C-Atomen, oder einen araliphatischen Kohlenwasserstoffrest mit 8 - 15, vorzugsweise 8 - 13 C-Atomen, bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethylcyclohexan (DE-Auslegeschrift 1 202 785, US-Patentschrift 3 401 190), 2,4-und 2,6-Hexahydrotoluylendiisocyanat sowie beliebige Gemische dieser Isomeren, Hexahydro-1,3-und/oder -1,4-phenylendiisocyanat, Perhydro-2,4'-und/oder -4,4'-diphenylmethan-diisocyanat, 1,3-und 1,4-Pheny-lendiisocyanat, 2,4- und 2,6-Toluylendiisocyanat sowie beliebige Gemische dieser Isomeren, Diphenyl-methan-2,4'- und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenylpolymethylenpolyisocyanate, wie sie durch Anilin-Formaldehyd-Kondensation und anschließende Phosgenierung erhalten und z.B. in den GB-Patentschriften 874 430 und 848 571 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 250 beschrieben werden, Norbornan-Diisocyanate gemäß US-Patentschrift 3 492 330, Allophanatgruppen aufweisende Polyisocyanate, wie.sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 472 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4-und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI" und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocya-nat ableiten.

Selbstverständlich können zur Denaturierung der Biomassen auch NCO-Gruppen aufweisende Umsetzungsprodukte aus den genannten Polyisocyanaten und den an sich aus der Polyurethanchemie bekannten hoch- und/ oder niedermolekularen Polyhydroxyverbindungen (sogenannte NCO-Präpolymere) eingesetzt werden. Auch Monoisocyanate wie z.B. Methyl-, Benzyl-, Phenyloder Tolylisocyanat sind geeignet.

Ökonomisch von besonderem Interesse ist es jedoch, für die Denaturierung der Biomassen die bei der großtechnischen Isocyanatherstellung anfallenden Destillationsrückstände zu benutzen, für die bisher - ähnlich wie dies oben im Zusammenhang mit den Biomassen erläutert wurde - noch kein praktischer Anwendungszweck· gefunden werden konnte und deren Beseitigung bisher ebenfalls erhebliche Probleme aufwarf (siehe in diesem Zusammenhang z.B. DE-OS 28 46 815 und 28 46 809). Für die Zwecke der vorliegenden Erfindung kommen dabei insbesondere die im wesentlichen monomerenfreien, vernetzten, in inerten organischen Lösungsmitteln unlöslichen, nicht unzersetzt schmelzbaren Destillationsrückstände in Betracht, wie sie bei der destillativen Entfernung von monomeren Toluylendiisocyanaten aus dem rohen Phosgenierungsprodukt von Toluylendiaminen, gegebenenfalls nach dem Einrühren in Wasser, als Schlacke anfallen und die vor ihrer Verwendung zu einem Pulver mit einer mittleren Teilchengröße von weniger als 2 mm, bevorzugt weniger als 500 μm, insbesondere weniger als 200 μm, besonders bevorzugt weniger als 100 μm, vermahlen und gegebenenfalls gleichzeitig und/oder anschließend durch Reaktion mit gegenüber den funktionellen Gruppen des Destillationsrückstands, insbesondere den Isocyanatgruppen, reaktiven Verbindungen chemisch modifiziert wurden.

Diese im erfindungsgemäßen Verfahren einzusetzenden Destillationsrückstände fallen, wie erwähnt, zwangsweise bei den heute gängigen Produktionsverfahren von 2,4- und/oder 2,6-Toluylendiisocyanat in großtechnischem Maßstab an. Es handelt sich dabei um höhermolekulare, über Hauptvalenzbindungen vernetzte Rückstandsschlacken, die meistens in einer Menge von über 10 Gew.-%, bezogen auf die berechnete quantitative Ausbeute an monomeren Diisocyanaten, entstehen und die zwecks besserer Handhabbarkeit meist über 150° C heiß in Wasser eingetragen werden, wobei unter Reaktion eines großen Teils der freien Isocyanatgruppen zu Polyharnstoffgruppen eine grobteilige, unregelmäßig geformte, unlösliche Schlacke entsteht. Diese Schlacke hat zwar noch einen gewissen Gehalt an freien NCO-Gruppen (im allgemeinen unter 15 Gew.-%, meist 1 bis 10 Gew.-%), jedoch ist sie praktisch frei an monomeren Diisocyanaten. Neben den NCO-Gruppen weisen die TDI-Rückstandsschlacken in unterschiedlichen Mengenverhältnissen Harnstoff-, Biuret- Uretdion-, Isocyanurat-, Carbodiimid-, Uretonimin- und gegebenenfalls auch Methylbenzimidazolongruppen sowie deren Biuretisierungsprodukte auf. Die Schlacken sind über diese verschiedenen funktionellen Gruppen so hoch vernetzt, daß sie selbst bei einer mittleren Teilchengröße von weniger als 5 μm in inerten organischen Lösungsmitteln wie Methylenchlorid, Cyclohexan, Cyclohexanon, Toluol, Xylol oder Dichlorbenzol auch bei Siedetemperatur praktisch unlöslich sind. In siedendem Dimethylformamid werden die Rückstandspulver teilweise angequollen, lösen sich jedoch nicht. Beim Erhitzen erweicht, wenn überhaupt, nur ein sehr geringer Anteil der erfindungsgemäß einzusetzenden TDI-Destillationsrückstände oberhalb von ca. 250°C; jedoch tritt oberhalb von ca. 280°C Zersetzung unter Gasentwicklung ein, ohne daß die Destillationsrückstände schmelzen.

Die, gegebenenfalls mit Wasser benetzte oder beim Denaturierungsprozeß im Rührkessel in Wasser suspendierte, sehr grobkörnige TDI-Rückstandsschlacke wird zunächst vorzugsweise mit Hilfe einer Zerkleinerungsmaschine, beispielsweise mit einem Schneidgranulator oder einer Hammermühle, auf weniger als 3 mm vorzerkleinert und anschließend zu einem beliebigen Zeitpunkt nach bekannten Mahlverfahren entweder in der Naß- oder Trockenphase auf eine für die vorgesehene Verwendung erforderliche Endfeinheit gebracht.

Wenn die TDI-Rückstände, beispielsweise beim großtechnisch praktizierten, oben beschriebenen Denaturierungsprozeß, in Wasser oder mit Wasser benetzt anfallen und die vorgesehene Umsetzung mit der Biomasse in wäßriger Suspension ausgeführt werden kann, bietet sich besonder ökonomisch und umweltfreundlich eine Naßzerkleinerung der TDI-Rückstandsschlacke in diskontinuierlich oder kontinuierlich arbeitenden, gegebenenfalls zweistufig hintereinander geschalteten Maschinen an. Die Feststoffkonzentrationen liegen während der Naßmahlung vorzugsweise zwischen 10 und 45 Gew.-%. Neben Rohr- und Kugelmühlen kommen besonders vorteilhaft Zahnkolloid-, Trigonal-Zahnring-, Kornrundscheiben- und Rührwerkskugelmühlen in Frage, je nachdem, welche Korngröße angestrebt wird.

In speziellen Fällen kann beim Mahlvorgang ein Teil oder das gesamte Wasser durch eine andere Flüssigkeit ersetzt werden, die jeweils nach dem späteren Verwendungszweck ausgewählt wird.

Die bei der Naßzerkleinerung erhaltenen, je nach Arbeitsweise noch unterschiedliche Menge an freien NCO-Gruppen aufweisenden TDI-Rückstandsschlacken werden entweder als sehr feinteilige Suspensionen, Pasten oder (nach Isolierung des Suspensionsmittels) Pulver in derselben Weise wie die durch Trockenzerkleiner erhältlichen TDI-Rückstands-Pulver eingesetzt.

Für die Trockenmahlung wird unter 2 - 3 mm vorzerkleinerte und bevorzugt bei Temperaturen unter 50°C vorgetrocknete, nicht wesentlich über 15 Gew.-%, bevorzugt unter 5 Gew.-% Feuchtigkeit enthaltende TDI-Rückstandsschlacke eingesetzt. Bei der Wahl der Trockenzerkleinerungsmaschinen sind im wesentlichen nur die gewünschte Endfeinheit und Korngrößenverteilung, aber auch die Mahlkosten von vorrangiger Bedeutung. Die erfindungsgemäß eingesetzten Rückstandsschlacken sind im Vergleich zu Kunststoffen sehr hart und wegen ihres hohen Vernetzungsgrades in den üblichen Zerkleinerungsmaschinen ohne Kühlungsprobleme bei Temperaturen bis ca. 220-300°C mahlbar, ohne zu erweichen, was insbesondere zur Erzielung von sehr kleinen Korngrößen von Bedeutung ist.

Verwendung finden beispielsweise Stifts-, Kugel- oder Pralltellermühlen, ferner Luftstrommühlen wie Schlagkreuz, Zahnkranz- oder Turbomühlen, aber besonders bevorzugt Luftstrahlmühlen, weil in diesen die Zerkleinerung hauptsächlich durch gegenseitige Teilchenstöße, weniger durch Wandstöße, stattfindet und schon in einem Durchsatz Feinstkorngrößen erzielt werden. Selbstverständlich sind auch bei der Trockenzerkleinerung sowohl ein- als auch mehrstufige diskontinuierliche oder kontinuierliche Mahlprozesse möglich.

Durch das Zerkleinern in der Naßphase oder im trockenen Zustand werden die in der Rückstandsschlacke inkludierten restlichen reaktiven Gruppen der oben genannten Art für die verschiedensten chemischen Reaktionen mit den Biomassen zugänglich gemacht.

Damit die Polyadditionsreaktionen mit den Bioüassen quantitativ ablaufen können, ist es daher zweckmäßig, die TDI-Rückstandsschlacke so fein wie möglich zu vermahlen.

Weitere Einzelheiten hinsichtlich der Herstellung der zur Denaturierung der Biomassen einzusetzenden TDI-Ruckstandspulver bzw. gegebenenfalls an den TDI-Rückstandschlacken mögliche Modifizierungsreaktionen mit Carbonylverbindungen und/oder gegenüber Isocyanaten reaktiven Verbindungen sind DE-OS 28 46 815 zu entnehmen.

Bei Verwendung von unter den Reaktionsbedingungen flüssigen bzw. in einem organischen Lösungsmittel gelösten Isocyanaten führt man die Denaturierungsreaktion bevorzugt bei Temperaturen zwischen 50 und 200°C, besonders bevorzugt 80 bis 120°C, aus. Die Denaturierung mit den oben beschriebenen TDI-Rückstandspulvern erfordert in der Regel etwas höhere Temperaturen, z.B. 70 bis 200°C, bevorzugt 90 bis 150°C. Im allgemeinen kann bei Mitverwendung eines Lösungsmittels die Reaktionstemperatur gegenüber der lösungsmittelfreien Arbeitsweise um ca. 20 bis 30°C gesenkt werden.

Die Denaturierung der Biomassen mittels Isocyanatgruppen aufweisenden Verbindungen kann in verschiedenen Varianten ausgeführt werden, je nachdem, ob man von getrockneten oder von in Wasser dispergierten Biomassen ausgeht. Beim Arbeiten in wäßriger Phase setzt man im allgemeinen Biomassen mit einem Feststoffgehalt von 0,3 bis 20 Gew.-%, vorzugsweise von 0,7 bis 15 Gew.-%, ein. Die wäßrigen Überschußbelebtschlämme aus biologischen Kläranlagen haben in der Regel einen Feststoffgehalt von 0,3 bis 3 Gew.-%, insbesondere von 0,7 bis 1,5 Gew.-%. Die Menge des Isocyanats beträgt (bezogen auf die Summe aus Trockengewicht der Biomasse und Gewicht des Isocyanats) beim Arbeiten in wäßriger Phase etwa 2 bis 95 Gew.-%, bevorzugt 3 bis 80 Gew.-% und hängt im übrigen auch von der Art des verwendeten Isocyanats ab:

Niedermolekulare (Molekulargewicht bis ca. 500) Mono- und Polyisocyanate, wie sie oben eingehend beschrieben werden, setzt man vorzugsweise in Mengen von 3 bis 20 Gew.-% ein, während man höhermolekulare Polyisocyanate (insbesondere auch die TDI-Rückstandspulver) in Mengen von etwa 20 bis 80 Gew.-% (jeweils bezogen auf die Summe aus Isocyanat und Trockengewicht der Biomasse) anwendet. Liegt hierbei das Isocyanat in einem stöchiometrischen Überschuß gegenüber den H-aciden Gruppen der Biomasse vor, so erhält man Polyadditionsprodukte mit freien NCO-Gruppen, was für manche Anwendungsgebiete der Verfahrensprodukte als reaktiver Füllstoff gewünscht ist.

Geht man bei der Denaturierung mittels Isocyanaten von in Wasser dispergierten Biomassen aus, dann ist es - vor allem bei gröberteiligem Material - vorteilhaft, ein organisches Lösungsmittel in einer Menge von bis 30 Gew.-%, vorzugsweise 2 bis 15 Gew.-%, bezogen auf die gesamte Dispersion, mitzuverwenden, damit die Reaktion zwischen den im allgemeinen hydrophoben Isocyanaten und der wäßrigen Biomasse erleichtert wird. Bevorzugt ist das organische Lösungsmittel wenigstens partiell mit Wasser mischbar.

Geeignete Lösungsmittel sind z.B. Aceton, Methylund Ethylalkohol, Benzol, Toluol, Essigsäureethylester und deren Gemische.

Beim Arbeiten in wäßriger Phase sind Temperaturen zwischen 80 und 130°C bevorzugt (gegebenenfalls kann auch unter Druck gearbeitet werden, beispielsweise bei einem Überdruck von 2 bis 100 bar). Der pH-Wert liegt im allgemeinen zwischen 1 und 10, vorzugsweise zwischen 4 und 8, und wird gegebenenfalls durch Zusatz von Säuren bzw. Alkali oder Ammoniak auf den gewünschten Bereich eingestellt. Durch hohe Temperaturen und niedrige pH-Werte wird während der Isocyanat-Polyadditionsreaktion die Plasmolyse, d.h. Schrumpfung des Protoplasmas und partielle Hydrolyse des Zellenmaterials, begünstigt.

Die Polyadditionsreaktion zwischen Biomasse und Isocyanaten in wäßriger Phase kann sowohl diskontinuierlich in üblichen Reaktionskesseln als auch gegebenenfalls kombiniert kontinuierlich ausgeführt werden, z.B. in Durchlaufmischern, wie sie beispielsweise in DE-OS 25 13 815 (US-PS 4 089 835) beschrieben werden oder in Mehrphasen-Reaktionsrohren gemäß DE-DS 27 19 970 (US-PS 4 119 613) und der dort zitierten Literatur. Die mittlere Verweilzeit des Reaktionsgemisches aus konzentrierter wäßriger Biomasse, Isocyanat und gegebenenfalls Lösungsmittel beträgt bei den kontinuierlichen Verfahren und Temperaturen nahe dem Siedepunkt vorzugsweise etwa 2 bis 20 Minuten, besonders bevorzugt 1 bis 5 Minuten. Von besonderem Interesse ist die Verwendung eines Mehrphasenströmungs-Reaktionsrohrs, da auf diese Weise gleichzeitig auch eine praktisch quantitative Trocknung des Polyadditionsprodukts erreicht wird. Bei diskontinuierlichen Kesselansätzen wird durch die Reaktion mit Isocyanaten Überschußbelebtschlamm aus biologisch arbeitenden Kläranlagen so weitgehend denaturiert und ausgeflockt, daß durch einfache Filtration die Verfahrensprodukte mit einem Feststoffgehalt von über 50 Gew.-% (auch ohne die sonst erforderlichen Filtrierhilfsmittel) isoliert werden können.

Verwendet man für die Denaturierungsreaktion mit Isocyanaten weitgehend wasserfreie Pulver von Biomassen, dann kann man davon ausgehen, daß der Zelltod bis auf einen kleinen Restgehalt lebender Zellen bereits eingetreten ist. Trotzdem haftet, wie bereits erwähnt, beispielsweise einem Belebtschlamm-Pulver ein unerträglicher Geruch an. Dieser kann, ebenso wie die latente Reaktivität, mittels der Isocyanat-Polyadditionsreaktion restlos beseitigt werden. Man kann dabei so vorgehen, daß die pulverförmige Biomasse in einem großen Überschuß eines flüssigen Mono- oder Polyisocyanats suspendiert wird. Schon bei Raumtemperatur erfolgt, allerdings innerhalb einiger Tage, die Additionsreaktion. Besser ist es, kurze Zeit, vorzugsweise je nach Temperatur 3 Minuten bis 3 Stunden, auf ca. 50 bis 130°C zu erhitzen und nach Erreichen eines konstanten NCO-Gehaltes das überschüssige, nicht verbrauchte niedermolekulare Isocyanat gegebenenfalls mit Hilfe eines Lösungsmittels zu entfernen. Auf diese Weise gewinnt man ein pulverförmiges, unlösliches Biomassen-Polyisocyanat, mit einem NCO-Gehalt, der über 15 Gew.-% betragen kann. Die Umsetzung der Biotrockenmasse mit einer äquivalenten Menge oder einem Überschuß an beliebigen Isocyanaten führt zu NCO-freien, sterilisierten Biomassen-Polyadditionsprodukten. Auch bei dieser Verfahrensvariante liegt die eingesetzte Menge an Isocyanat (bezogen auf Gesamtmenge aus Biomasse und Isocyanat) bei 2 bis 98 Gew.-%, bevorzugt bei 5 bis 70 Gew.-%. Die Reaktion kann dabei entweder in Substanz oder in einem beliebigen der obengenannten organischen Lösungsmittel ablaufen (die Menge an Lösungsmittel beträgt dabei 1 bis 50 Gew.-%, vorzugsweise 5 bis 20 Gew.-%, bezogen auf die Mischung). Für das Arbeiten mit weitgehend wasserfreien Biomassen, gegebenenfalls mit einem flüssigen, organischen Dispersionsmittel, kommen wieder diskontinuierliche Kesselverfahren, insbesondere jedoch auch kontinuierliche Varfahrensvarianten mittels Durchlaufmischern, Mehrphasen-Reaktionsrohren oder an sich bekannten Reaktionsschneckenmaschinen in Frage.

Von besonderer technischer Bedeutung, vor allem wenn die oben näher beschriebenen pulverförmigen TDI-Rückstandsschlacken als Isocyanatkomponente eingesetzt werden, ist eine Verfahrensvariante, welche in weitgehender Abwesenheit von Wasser oder Lösungsmitteln ausgeführt werden kann.

Von besonderer technischer Bedeutung, vor allem wenn das Reaktionsgemisch neben den Biomassen nur geringe Mengen an flüssigen Komponenten (z.B. Lösungsmittel, Feuchtigkeit oder flüssige Reaktionspartner für die Biomassen) enthält, und bevorzugt wenn die oben näher beschriebenen pulverförmigen TDI-Rückstandsschlacken als Isocyanatkomponente eingesetzt werden, sind zwei gegebenenfalls miteinander koppelbare Verfahrensweisen, nämlich 1. die an sich bekannte Schleuder- und Wirbeltechnik mit Hilfe von mechanisch wirksamen Mischern oder Mischwerkzeugen und/oder 2. die Fließbett-Technik.

Zweckmäßig verwendet man für die zuerst genannte Verfahrensmethode die im Handel befindlichen, heizbzw. kühlbaren Mischer, bei denen in der Mischtrommel beispielsweise pflugscharähnliche Schaufeln um eine drehbare Achse und gegebenenfalls zusätzlich unabhängig bewegbare Messerköpfe montiert sind. Wenn zunächst durch Laborversuche und anschließend durch halbtechnische Versuche in 100 bis 200 1-Mischapparaturen sichergestellt wurde, unter welchen Verfahrensbedingungen während der Denaturierungsreaktion (Temperatur; Verweilzeit) ein weitgehend pulverartiger Zustand erhalten bleibt, ist der Einsatz großvolumiger, gegebenenfalls hintereinander geschalteter Mischaggregate zur Produktion großtechnischer Mengen an Biomassen-Isocyanat-Polyadditionsprodukten ohne größere Schwierigkeiten möglich.

Für die Anwendung der zweiten Verfahrensvariante, der Fließbett-Technik, ist der schwer berechenbare optimale Fluidisationszustand im Fließbett, der bei gegebenen Feststoffdaten wie Dichte, Teilchengröße und -verteilung und dem gewählten Strömungsmedium (beispielsweise Luft oder Stickstoff) wesentlich von der Differenz zwischen Lockerungsgeschwindigkeit und Geschwindigkeit des Strömungsmediums abhängt, in einfacher Weise durch einige Vorversuche in einem kleinen Laborfließbett zu ermitteln, wobei man zweckmäßig die gegebenenfalls vorgesehene Mitverwendung flüssiger oder gasförmiger Reaktionskomponenten schon in diese Vorversuche mit einbezieht.

Wenn die Rieselfähigkeit einer Schüttung während des Prozesses nicht ausreicht und eine gewisse Klebrigkeit auftritt, kann in speziellen Fällen ein spezifisch schweres, körniges Material, beispielsweise Quarzsand mitverwendet und das Polyadditionsprodukt in einem Zyklon isoliert werden.

In Fließbetten mit hohen Durchströmungsgeschwindigkeiten kann durch die heftige Feststoffbewegung gegegebenenfalls auch während der Denaturierungsreaktionen eine Feinzerkleinerung der Biomassen durchgeführt werden.

### (3) Nachbehandlung und Zusatzstoffe

Vor ihrer Verwendung als Füllstoffe im erfindungsgemäßen Verfahren können die denaturierten Biomassen noch in unterschiedlichster Weise modifiziert werden, indem man sie, gegebenenfalls in Gegenwart von Verdünnungsmitteln, wie z.B. wasserfreien organischen Lösungsmitteln, bei Temperaturen zwischen 0°C und 200°C, vorzugsweise zwischen 10°C und 140°C, mit den verschiedensten Reagenzien behandelt. Hierbei treten im wesentlichen an der Oberfläche der Verfahrensprodukte chemische Reaktionen auf, so daß man an der Oberfläche chemisch modifizierte Produkte erhält.

Für eine derartige chemische Modifizierung der Oberfläche der denaturierten Biomassen kommen vorzugsweise in Betracht
- die Behandlung mit Harnstoffschmelzen;
- die Behandlung mit Acylierungsmitteln, wie Ameisensäure, Essigsäureanhydrid oder gemischten Säureanhydriden aus Essigsäure und Ölsäure (vorzugsweise in Gegenwart von Natrium- oder Kaliumacetat); mit cyclischen Säureanhydriden, wie Maleinsäureanhydrid, Phthalsäureanhydrid oder Hexahydrophthalsäureanhydrid; mit Schmelzen von Dicarbonsäuren, wie Adipinsäure, Phthalsäure, Hexahydrophthalsäure oder Trimellithsäure; mit anorganischen Säurechloriden, wie Chlorcyan, Phosgen, Thionylchlorid, Schwefelchloriden, Phosphoroxychlorid, Phosphorpentachlorid, Siliziumtetrachlorid, Antimontrichlorid oder Titantetrachlorid; mit organischen Säurechloriden, wie Acetylchlorid, Benzoylchlorid, Chlorameisensäureestern, Benzolsulfonsäurechloriden, Phosphorsäureesterchloriden, Chlormethansulfochlorid oder Cyanursäurechlorid;
- die Behandlung mit Alkylierungsmitteln, wie Dimethylsulfat, Methyljodid oder Methylbromid, Dichlorethan, Glykolchlorhydrin, Chloressigsäureethylester, Dichloressigsäureethylester, Chloracetaldehyd-diethylacetal, Allylchlorid, Benzylchlorid, Trichlormethylisocyaniddichlorid oder anderen Isocyaniddichloriden;
- die Behandlung mit ε-Caprolactam, ε-Caprolacton, Hydroxypivalinsäurelacton, cyclischen 6-gliedrigen oder 8-gliedrigen Siloxanen, Azalactamen wie sie aus der DE-OS 2 035 800 bekannt sind, Glykolcarbonat, Ethylenoxid, Propylenoxid, Butylenoxid, Styroloxid, Epichlorhydrin, Butyrolacton, Valerolacton, Oxazolidinen, Oxazolinen, Imidazoliden, Isatosäureanhydrid oder Leuchsschen Anhydriden aus Aminosäuren und Phosgen;

- die Behandlung mit Acrylnitril oder anderen Vinylmonomeren, wie Acrylsäure, Methacrylsäure bzw. deren Methyl-, Ethyl-, β-Hydroxyethyloder Propylestern;

- die Behandlung mit Hydroxyalkanphosphonsäureestern bzw. den zugrunde liegenden Säuren, insbesondere mit Hydroxymethyl-phosphonsäureestern bzw. der freien Hydroxymethyl-phosphonsäure;

- die Behandlung mit Chlormethylalkoxysilanen;

- die Behandlung mit den verschiedensten Monooder Polynitrilen, bevorzugt Hydroxymethylnitril, unter den Bedingungen der durch Hydroxylgruppen katalysierten Thorpe-Reaktion;

- die Behandlung mit Polyisocyanaten der obengenannten Art in Gegenwart von aus der Polyurethanchemie an sich bekannten, gegenüber Isocyanaten reaktiven Verbindungen (insbesondere Polyolen mit einem Molekulargewicht zwischen 62 und 500). Auf diese Weise kann man die denaturierte Biomasse mit einer Polyurethanhülle umgeben, ohne daß die pulverförmige Konsistenz des Materials verloren geht. Ein ähnlicher Effekt wird erreicht, wenn man die oben erwähnten, noch freie NCO-Gruppen enthaltenden denaturierten Biomassen mit Polyolen nachbehandelt.

Als Nachbehandlungsreagenzien seien außerdem erwähnt: Natriumhydroxid, Kaliumhydroxid, Calciumhydroxid, Natriumsulfid, Rongalit, Ammoniumpolysulfide, Diethylphosphit und Dimethylphosphit.

Bei diesen Nachbehandlungsreaktionen können auch die verschiedensten Mischpolymerisationen oder Polymerisationen von Vinylmonomeren durchgeführt werden, wobei die Biomassen-Mischkondensate durch die entstehenden Polymeren umhüllt bzw. mikroverkapselt werden. Hierbei können selbstverständlich die "Hüllmaterialien" auch in einem großen Überschuß eingesetzt werden.

Es ist auch möglich, im Anschluß an die Denaturierungsreaktion auf den Verfahrensprodukten Polymethylenharnstoffe, Polyalkylidenharnstoffe und andere schwer- oder unlösliche Verbindungen, z.B. hochvernetzte Aminoplastkondensate zu erzeugen, die infolge ihrer Unlöslichkeit praktisch keine kovalenten Verknüpfungen zur Biomasse aufweisen. Derartige Mischungen, in denen die Menge des nicht kovalent gebundenen Anteils an Aminoplastkondensaten bzw. Phenoplastkondensaten beliebig variiert sein kann, stellen insbesondere für den Fall der Beladung mit Polymethylenthioharnstoffen, vernetzten Polymethylenmelaminpulvern, Harnstoff-Hydrazodicarbonamid-Formaldehydkondensaten und Dicyandiamid- bzw. Oxamid-Kondensaten außerordentlich interessante Flammschutzmittel für die verschiedensten Polyurethankunststoffe, insbesondere Schaumstoffe, dar.

Von Interesse ist auch die nachträgliche Beladung der denaturierten Biomassen mit schwerlöslichem Melaminphosphat, schwerlöslichem Harnstoffoxalat, Harnstoffnitrat oder schwerlöslichem Ammoniummagnesiumphosphat. Auch die Zugabe von Tonerdehydraten, Aluminiumoxiden, Calciumcarbonat, von Quarzmehl sowie die Zugabe linearer oder vernetzter Polymethylenharnstoffe, von pulvrigen Melamin-Formaldehyd-Kondensaten, Harnstoff-Hydrazodicarbonamid-Kondensaten und hochmolekularen Polyammoniumpolyphosphaten ist von Bedeutung. Die dabei entstehenden Produkte eignen sich hervorragend als Flammschutzmittel für Polyurethankunststoffe.

Neben den eingehend beschriebenen Isocyanaten bzw. sonstigen reaktiven niedermolekularen Verbindungen können den Biomassen vor, während oder nach der Denaturierungsreaktion die verschiedensten Füll- und Zusatzstoffe beigemischt werden, z.B. organische Naturstoffe und daraus gewonnene Produkte, anorganische Naturstoffe und daraus gewonnene Produkte, synthetische organische Produkte, synthetische anorganische Produkte und/oder gemischt organisch-anorganische Produkte.

Vorzugsweise in Frage kommende organische Naturstoffe und daraus gewonnene Produkte sind hierbei Holzpulver oder -späne, Ligninpulver, Ligninsulfonsäuren, ammonifizierte Ligninsulfonsäuren, Humus, Huminsäuren, ammonifizierte Huminsäuren, Torf, Proteine und deren Abbauprodukte, z.B. Polypeptide, wie Wolle und Gelatine, Fischmehl und Knochenmehl, ferner Pektine, Polysaccharide, wie Stärke und Cellulose, Hemicellulosen, homogenisierte Materialien pflanzlichen und tierischen Ursprungs, Aktivkohlen sowie Aschen, die durch Verbrennung organischer, durch Photosynthese gebildete Stoffe oder üblicher Brennstoffe erhalten wurden.

Als anorganische Naturstoffe und daraus gewonnene Produkte kommen vorzugsweise in Betracht Silikate, wie Aluminiumsilikate, Calciumsilikate, Magnesiumsilikate und Alkalisilikate, Kieselsäuren, insbesondere disperse Kieselsäuren, Kieselgele, weiterhin Tonmineralien, Glimmer, Carbonate wie Calciumcarbonat, Phorphorit und Phosphate wie Calciumphosphat und Ammoniummagnesiumphosphat sowie Sulfate wie Calciumsulfat.

Als synthetische organische Produkte kommen vorzugsweise neben natürlichen oder Synthesekautschuken, Polyamiden und Epoxiharzen die schon ausführlich beschriebenen Aminoplast- und Phenolplastharze in Frage.

Besonders geeignete Zusatzstoffe sind auch pulverförmige TDI-R-ückstandsschlacken der weiter oben beschriebenen Art, deren NCO-Gruppen durch Umsetzung mit Wasser oder anderen H-aciden Verbindungen quantitativ abreagiert wurden (derartig modifizierte TDI-Destillationsrückstände sind ebenfalls in den schon erwähnten DE-OSen 28 46 809 und 28 46 815 beschrieben). Auch wenn sie NCO-frei sind, enthalten derartige Pulver noch zahlreiche reaktive Gruppen (z.B. Harnstoff-, Urethan-, Carbodiimid- und/oder Uretdiongruppen), welche an den bei der Denaturierungsreaktion ablaufenden Polyadditions- und Polykondensationsreaktion teilnehmen können.

## II) Erfindungsgemäßes Verfahren

### (1) Polyisocyanate

Als Polyisocyanate (Komponente A) kommen für das erfindungsgemäße Verfahren alle die schon oben im Zusammenhang mit der Denaturierung von Biomassen beschriebenen NCO-Gruppen aufweisenden Verbindungen in Frage. Bevorzugte Ausgangskomponenten für die Herstellung der Polyurethankunststoffe sind im Allgemeinen das 2,4- und das 2,6-Toluylendiisocyanat sowie beliebige Gemische dieser Isomeren ("TDI"), 4,4'-Diphenylmethandiisocyanat, Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate", insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

### (2) Gegenüber Isocyanaten reaktive Verbindungen

Gegebenenfalls werden im erfindungsgemäßen Verfahren neben den als reaktiver Füllstoff dienenden denaturierten Biomassen und den Polyisocyanaten auch niedermolekulare und/oder höhermolekulare Verbindungen (Komponente B) als zusätzlicher Reaktionspartner mitverwendet, welche gegenüber Isocyanaten reaktionsfähige Wasserstoffatome aufweisen. Höhermolekulare Stoffe dieser Art sind neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, vom Molekulargewicht 500 bis 8.000, vorzugsweise 1.000 bis 5.000, z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele für solche Carbonsäuren und deren Derivate seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolglykol, Tetraethylenglykol und höhere Polyethylenglykole, Dipropylenglykol und höhere Polypropylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäß in Frage kommenden, zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Expoide, vorzugsweise von Ethylenoxid und Propylenoxid, gegebenfalls im Gemisch oder nacheinader, an Startkomponenten mit reaktionsfähigen Wasserstoffatomen wie Wasser, Alkohole, Ammoniak oder Amine,z.B. Ethylenglykol, Propyllenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z.B. in den DE-Auslegeschriften 1 176 358 und 1 064 938 beschrieben werden, sowie auf Formit oder Formose gestartete Polyether (DE-Offenlengungsschriften 2 639 082 bzw. 2 737 951), kommen erfindungsgemäß in Frage. Vielfach sind solche Polyether bevorzugt, die überwiegend (bis zu 90 Gew.-%, besogen auf alle vorhandenen OH-Gruppen im Polyether) primäre OH-Gruppen aufweisen. Auch OH-Gruppen aufweisende Polybutadiene sind erfindungsgemäß geeginet.

c) Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei-den Produkten z.B. um Polythiomischether, Polythioetherester oder Polythioetheresteramide.

d) Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyamiden und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

h) Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 ß49 515) und 2 544 195 ein Gemisch aus verschiedenen Polyhydroxylverbindungen (z.B. aus einem Polyether- und einem Polyesterpolyol) durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z.B. gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Garbodiimidgruppe mit einem Amin, Amid, Phosphit oder einer Carbonsäure erhält man Guanidin-, Phosphonoformamidin- bzw. Acrylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 539 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-Patentschriften 3 383 351, .3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyetherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebnenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit 2 bis 8, gegenüber Isocyanaten reaktionsfähigen Wasserstoffatomen mit einem Molekulargewicht von 500 bis 8.000, z.B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Gegebenenfalls können darüber hinaus erfindungsgemäß auch Verbindungen mit mindestens zwei gegenüber Isocyanaten reaktionsfähigen Wasserstoffatomen und einem Molekulargewicht von 32 bis 400 mitverwendet werden. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethylolethan, Pentaerythrit, Chinit, Mannit und Sorbit, Ricinusöl, Diethylenglykol, Triethylenglykol, Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Dihydroxymethyl-hydrochinon, Ethanolamin, Diethanolamin, N-Methyldiethanolamin, Triethanolamin und 3-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit" in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532).

Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylenhydrazide wie z.B. β-Semicarbazidopropionsäurehydrazid (DE-Offenlegungsschrift 1 770 591), Semicarbazidoalkylencarbazinester wie z.B. 2-Semicarbazidoethyl-carbazinester (DE-Offenlegungsschrift 1 918 504) oder auch Aminosemicarbazid-Verbindungen wie z.B. β-Aminoethyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635-(US-Patentschriften 3 681 290 und 3 736 350), 2 040 650 und 2 160 589 beschriebenen estergruppenhaltigen Diamine, die Ethergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenyl-methan, Toluylendiamin, 4,4'-Diaminodiphenyl-methan, 4,4'-Diaminodiphenyldisulfide (DE-Offenlegungsschrift 2 404 976), Diaminodiphenyldithioether (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-amino-propan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cylohexylamin, Monoalkohole wie Butanol, 2-Ethylhexanol, Octanol, Dodecanol, die verschiedenen Amylalkohole, Cyclohexanol, Ethylenglykolmonoethylether und -monomethylether.

### (3) Reaktive organische Füllstoffe

Kennzeichnend für die vorliegende Erfindung ist die Verwendung der oben detailliert beschriebenen denaturierten Biomassen als reaktiver organischer Füllstoff im Polyisocyanat-Polyadditionsverfahren. Erfindungsgemäß werden die Biomassen in einem getrennten Schritt nach einem der oben eingehend beschriebenen Verfahren denaturiert und erst in dieser modifizierten Form als Füllstoff für polyurethanbildende Reaktionsgemische eingesetzt.

### (4) Zusatzstoffe

Im erfindungsgemäßen Verfahren können gegebenenfalls auch die verschiedensten Hilfs- und Zusatzmittel mitverwendet werden:

a) Wasser und/oder leicht flüchtige anorganische oder organische Substanzen als Treibmittel. Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel z.B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Katalysatoren der an sich bekannten Art, z.B. tertiäre Amine, wie Triethylamin, Tributylamin, N-Methyl-morpholin, N-Ethylmorpholin, N,N,N',N'-Tetramethyl-ethylendiamin, Pentamethyl-diethylentriamin und höhere Homologe (DE-Offenlegungsschriften 2 624 527 und 2 624 528), 1,4-Diaza-bicyclo-(2,2,2)-octan, N-Methyl-N'-dimethylaminoethylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diethylbenzylamin, Bis-(N,N-diethylaminoethyl)-adipat, N,N,N',N'-Tetramethyl-1,3-butan-diamin, N,N-Dimethyl-β-phenylethylamin, 1,2-Dimethylimidazol, 2-Methylimidazol, monocyclische und bicyclische Amidine (DE-Offenlegungsschrift 1 720 633), Bis-(dialkylamino)alkylether (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysatoren sind z.B. Triethanolamin, Triisopropanolamin, N-Methyldiethanolamin, N-Ethyl-diethanolamin, N,N-Dimethyl-diethanolamin, deren Umset zungsprodukte mit Alkylenoxiden wie Propylenoxid und/oder Ethylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-sila-morpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metall-Verbindungen, insbesondere organische Zinnverbindungen, als Katalysatoren, verwendet werden. Als organische Zinnverbindungen kommen neben schwefelhaltigen Verbindungen wie Di-n-octylzinn-mercaptid (DE-Auslegeschrift 1 769 367; US-Patentschrift 3 645 927) vorzugsweise Zinn(II)-salze von Carbonsäuren wie Zinn(II)acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf gesamtes Reaktionsgemisch, eingesetzt.

Im allgemeinen wirken jedoch bereits die in den Biomassen vorhandenen Metallionen und Amingruppen beschleunigend auf die Polyisocyanat-Polyadditionsreaktion.

c) Oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diethylamin oder stearinsaures Diethanolamin in Frage. Auch Alkali-oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat oder Ammoniumphosphat und -polyphosphat, ferner Stabilisatoren gegen Alterungsund Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

## (5) Verfahrensweise

Die erfindungsgemäß als reaktive organische Füllstoffe dienenden denaturierten Biomassen (Komponente C) können sowohl für sich als auch im Gemisch mit jeder der anderen Komponenten eingesetzt werden. Enthalten die Biomassen noch freie Gruppen mit reaktiven Wasserstoffatomen, dann beginnt nach dem Einrühren der pulverförmigen Biomassen in monomere, flüssige Polyisocyanate sehr rasch die Menge der freien Isocyanatgruppen unter Viskositätserhöhung abzunehmen. Es empfiehlt sich daher, wenn die Komponenten A und C im erfindungsgemäßen Verfahren gemeinsam eingesetzt werden sollen, die Vorvermischung entweder kurz vor der Umsetzung mit der Komponente B vorzunehmen oder man zerkleinert das in vielen Fällen beim längeren Stehenlassen erstarrte Polyaddukt vor seiner weiteren Umsetzung. Demgegenüber bilden die Biomassen, vor allem wenn sie fein pulverisiert sind (mittlere Teilchengröße bevorzugt unter 100 µm, besonders bevorzugt unter 20 µm), mit flüssigen Polyhydroxylverbindungen (Komponente B des erfindungsgemäßen Verfahrens) Suspensionen, welche mehrere Tage oder in manchen Fällen sogar viele Monate sedimentationsstabil sind. Die Lagerstabilität dieser Dispersion wird insbesondere auf mehrere Monate verlängert, wenn man pulverisierte Biomassen mit freien Isocyanatgruppen einsetzt und diese mit Hydroxylgruppen der Polyhydroxylverbindung durch kurzes Erwärmen der Suspension (bevorzugt auf Temperaturen zwischen 80 und 150° C) zur Umsetzung bringt.

Es ist als überraschend anzusehen, daß NCO-Gruppen aufweisende Präpolymere aus den vorgenannten Suspensionen mit einem Überschuß an Polyisocyanat ebenfalls sehr lagerstabil sind, während, wie erwähnt, Mischungen der Biomassen mit Polyisocyanaten geringere Lagerstabilität aufweisen.

Im allgemeinen werden die gegebenenfalls chemisch modifizierten Biomassen erfindungsgemäß in einer Menge von 2 bis 90 Gew.-%, bevorzugt 5 bis 40 Gew.-%, besonders bevorzugt 10 bis 30 Gew.-%, bezogen auf Summe der Komponenten A, B und C, eingesetzt. Sie bewirken in den meisten Fällen eine so große Erhöhung der Härte der Polyurethan-Endprodukte unter gleichzeitiger starker Erhöhung der Zugfestigkeit, daß häufig sogar auf die übliche Mitverwendung von niedermolekularen Kettenverlängerungsmitteln ganz oder teilweise verzichtet werden kann. Bei sehr großen Anteilen an modifizierter Biomasse, insbesondere über 40 Gew.-%, bezogen auf Endprodukt, erhält man äußerst preiswerte, neuartige Kunststoffrohstoffe, gegebenenfalls in Pulverform, die sich in vielen Fällen thermoplastisch verformen lassen.

Beim erfindungsgemäßen Verfahren werden die Reaktionskomponenten A, B und C nach dem an sich bekannten Einstufenverfahren, dem Präpolymerverfahren oder dem Semipräpolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben. Erfindungsgemäß ist jedoch auch die Herstellung von Polyisocyanuratkunststoffen (aus den Komponenten A und C) möglich.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium oder Kunststoff, z.B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekanntgeworden sind.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Gemäß einer besonderen Variante der vorliegenden Erfindung werden die Biomassen als reaktive Füllstoffe bei der Herstellung von Spanplatten durch Bindung oder Imprägnierung lignocellulosehaltiger Rohstoffe mittels Polyisocyanaten eingesetzt.

Die Herstellung von Platten oder Formteilen in Heißpressen durch Bindung von lignocellulosehaltigen Fasern, Spänen oder Lagen ist bekannt. Als Bindemittel wurden hierfür bisher meist Kondensationsprodukte des Formaldehyds mit Harnstoff, Melamin oder Phenol bevorzugt.

Die so hergestellten lignocellulosehaltigen Werkstoffe sind aber hinsichtlich ihrer Dauerfestigkeit und ihres Verhaltens bei Feuchtigkeitseinwirkung unter Bedingungen, welchen sie insbesondere bei ihrer Verwendung im Bauwesen unterworfen sind, nicht befriedigend. Um die Stabilität und das Feuchteverhalten der Produkte zu verbessern, sowie zwecks Erhöhung der mechanischen Festigkeiten, wurde in diesem Zusammenhang auch die Verwendung von Polyisocyanaten als Bindemittel und/oder Imprägniermittel vorgeschlagen. Neben qualitätsverbessernden Eigenschaften besitzen Polyisocyanate als Bindemittel, wie es die DE-OS 2 109 686 offenbart, weitreichende verfahrenstechnische Vorteile. Als Bindemittel kommen alle die obengenannten Polyisocyanate in Frage, vorzugsweise jedoch gemäß DE-OS 2 711 858 rohes Diphenylmethandiisocyanat, insbesondere ein Produkt mit einer Viskosität bei 25°C von 50 bis 600 mPas und einem NCO-Gehalt zwischen 28 und 32 Gew.-%, welches 35 bis 70 Gew.-% an Diisocyanatodiphenylmethan, davon ca. 1 bis 8 Gew.-% des 2,4'-Isomeren und 0 bis 2 Gew.-% des 2,2'-Isomeren, enthält.

Wie schon erwähnt, ist es bekannt, daß Polyisocyanate für die Herstellung von Spanplatten bzw. Formteilen auf Basis lignocellulosehaltiger Rohstoffe infolge der grundsätzlich anderen Bindungsart wesentliche Vorteile gegenüber den bisher üblichen Bindemittelharzen besitzen.

Da es sich um wasserfreie Bindemittel handelt, muß in der Heißpresse nicht soviel Wasser verdampft werden, was zusammen mit der hohen Reaktivität der Polyisocyanate sehr kurze Preßzeiten erlaubt. Auch das sonst erforderliche starke Trocknen der Späne wird überflüssig und daher das Verfahren kostengünstiger. Bei der Bindung mit Polyisocyanaten wirken sich auch staubförmige Anteile des lignocellulosehaltigen Rohstoffes nicht störend aus, was zu einer besseren Rohstoffausnutzung führt und die Gefahr von Betriebsstörungen während der Spanplattenherstellung vermindert. Es treten auch keine Abwasserprobleme auf da in geschlossenem System gearbeitet wird. Bei gleicher Bindemittelmenge werden die Biege- und Querzugfestigkeiten der Werkstoffe erhöht und die Quellbarkeit bei Feuchtigkeits- bzw. Wassereinwirkung vermindert. Die mit Polyisocyanaten mögliche Bindung ansonst schwer verleimbarer landwirtschaftlicher Abfallstoffe wie Stroh, Reisschalen, Alfagras etc. trägt darüber hinaus weltweit zur Verminderung von Rohstoffversorguns- und Umweltschutzproblemen bei.

Besonders das gravierende Problem der Belästigung und Gesundheitsbeeinträchtigung durch das aus mit Harnstoff-Formaldehyd- oder (gegebenenfalls modifizierten) Melamin/ Harnstoff-Formaldehyd-Harzen gebundenen Spanplatten entweichende Formaldehydgas wird durch Einsatz von Polyisocyanaten vermindert bzw. ausgeschaltet.

Alle diese Vorteile von Polyisocyanaten als Bindemittel für lignocellulosehaltige Materialien konnten bisher in großtechnischem Umfang nur beschränkt genutzt werden, da sich mit den handelsüblichen Polyisocyanaten zwar in vieler Hinsicht befriedigende Ergebnisse erzielen lassen, diese Polyisocyanate jedoch im Vergleich zu Phenol/ Formaldehyd- und Harnstoff/Formaldehyd-Harzen im Preis häufig wesentlich höher liegen. Ersetzt man nun erfindungsgemäß einen Teil des erforderlichen Polyisocyanats durch die infolge ihrer zahlreichen reaktiven Gruppen ebenfalls als Bindemittel wirkenden modifizierten Biomassen, so erhält man nicht nur Werkstoffe, welche den mit konventionellen Polyisocyanaten als Bindemittel erhaltenen Spanplatten bzw. Formkörpern in vieler Hinsicht überlegen sind, sondern sie lassen sich auch wegen der Mitverwendung der bisher praktisch wertlosen Biomassen besonders ökonomisch herstellen.

Geeignete lignocellulosehaltige Rohstoffe, welche erfindungsgemäß mit einer Mischung aus flüssigem Polyisocyanat und gegebenenfalls chemisch modifizierter denaturierter Biomasse gebunden werden können, sind beispielsweise Holz, Rind, Kork, Bagasse, Stroh, Flachs, Bambus, Alfagras, Reisschalen, Sisal- und Kokosfasern. Das Material kann dabei in Form von Granulaten, Spänen, Fasern oder Mehl vorliegen und einen Wassergehalt von 0 bis 35 Gew.-%, vorzugsweise von 5 bis 25 Gew.-%, aufweisen. Es wird bezogen auf Gesamtgewicht des Formkörpers - mit ca. 1 bis 70 Gew.-%, vorzugsweise 1,5 bis 8 Gew.-%, an Polyisocyanat sowie 2 bis 80 Gew.-%, bevorzugt 5 bis 40 Gew.-%, besonders bevorzugt 10 bis 30 Gew.-%, an feinteiliger, gegebenenfalls chemisch modifizierter denaturierter Biomasse (in beliebiger Reihenfolge) versetzt und - im allgemeinen unter Einwirkung von Druck und Hitze - zu Platten oder Formkörpern verpreßt. In derselben Weise können auch mehrlagige Platten oder Formteile aus Furnieren, Papieren oder Geweben hergestellt werden. Auch mehrschichtige Platten oder Formteile aus Furnieren und Streifen-, Stab- oder Stäbchenmittellagen, sogenannte Tischlerplatten, können erfindungsgemäß hergestellt werden, indem man die Furniere wie oben beschrieben mit einem Polyisocyanat und der Biomasse behandelt und anschließend mit den Mittellagen in der Regel bei erhöhter Temperatur und erhöhtem Druckverpreßt. Vorzugsweise werden dabei Temperaturen von 100 bis 250°C, besonders bevorzugt 130 bis 200°C, eingehalten. Der Anfangspreßdruck liegt vorzugsweise zwischen 5 und 150 bar; im Laufe des Preßvorgangs fällt dann der Druck meist bis gegen 0 ab.

Erfindungsgemäß können die Bindemittelkombinationen (flüssiges Polyisocyanat einerseits; pulverförmige Biomasse andererseits) auch in Kombination mit Polyhydroxylverbindungen, wie sie aus der Polyurethanchemie an sich bekannt sind, in einem NCO/OH-Verhältnis zwischen 1:2 und 10:1, vorzugsweise 1,5:1 bis 1:1, eingesetzt werden.

Es ist dabei möglich, die einzelnen Komponenten getrennt oder als reaktives Gemisch einzusetzen. Vorzugsweise wird erfindungsgemäß die Polyhydroxylverbindung mit der Biomasse zu einer lagerstabilen Suspension vorvermischt. Es ist auch möglich, an sich bekannte Treibmittel in einer Menge von ca. 0,5 bis 30 Gew.-%, bezogen auf Binde- oder Imprägniermittel, und/oder andere die Schaumbildung oder die chemische Reaktion zwischen Polyisocyanaten, lignocellulosehaltigem Material und gegebenenfalls Polyhydroxylverbindungen beeinflussende Additive wie Stabilisatoren, Katalysatoren und Aktivatoren in einer Menge von 0,05 bis 10 Gew.-%, bezogen auf Binde- bzw. Imprägniermittel, zuzusetzen. Alle diese bei der Herstellung von lignocellulosehaltigen Formkörpern gegebenenfalls mitzuverwendenden Ausgangsmaterialien sind oben im Zusammenhang mit der Herstellung von Polyurethankunststoffen eingehend beschrieben.

Die erfindungsgemäß bei der Herstellung von Platten oder Formteilen aus lignocellulosehaltigem Material zu verwendenden Bindemittelkombinationen (flüssiges Polyisocyanat; feinteilige denaturierte Biomassen) können auch mit den in der Holzwerkstoffindustrie bisher überwiegend eingesetzten wäßrigen Lösungen von Kondensationsprodukten aus Formaldehyd mit Harnstoff und/oder Melamin und/oder Phenol kombiniert werden, aber auch mit anderen, bisher weniger üblichen Binde- und Imprägniermitteln, wie z.B. Sulfitablauge oder Tannin, wobei ein Mischungsverhältnis der erfindungsgemäßen mit diesen zusätzlichen Bindemitteln zwischen 1:10 und 10:1, vorzugsweise zwischen 1:5 und 5:1, eingehalten werden kann und wobei man die erfindungsgemäßen und die zusätzlichen Bindemittel entweder separat oder auch in Mischung einsetzen kann.

Besonders vorteilhaft sind derartige Kombinationen bei der Herstellung von mehrschichtigen Platten mit speziellen Eigenschaften. Man kann z.B. die äußeren Schichten mit konventionellen Klebstoffen (allein oder gemeinsam mit den Polyisocyanatgemischen) und eine oder mehrere innere Schichten mit den erfindungsgemäß zu verwendenden Kombinationen aus flüssigem Polyisocyanat und pulverförmiger Biomasse (allein oder gemeinsam mit konventionellen Klebstoffen) versetzen und anschließend miteinander verpressen.

Infolge ihrer hervorragenden mechanischen Eigenschaften und wegen der Verringerung der Brennbarkeit eignen sich die erfindungsgemäß hergestellten Platten oder Formteile auf Basis von lignocellulosehaltigen Rohstoffen vor allem für eine Verwendung im Bauwesen. Um den Platten oder Formteilen die hierfür im allgemeinen erforderliche Beständigkeit gegen Pilzbefall, Insektenfraß oder Feuereinwirkung zu verleihen, kann man den Bindemitteln die handelsüblichen organischen oder anorganischen Schutzmittel, in reiner Form oder als Lösung in einer Menge von ca. 0,05 bis 30 Gew.-%, vorzugsweise 0,5 bis 20 Gew.-%, bezogen auf lignocellulosehaltige Rohstoffe, zusetzen. Als Lösungsmittel kommen in Frage: Wasser oder organische Lösungsmittel, z.B. Rückstandsöle aus der Erdölaufarbeitung, Chlorkohlenwasserstoffe u.a. Die Verleimungsqualität wird hierdurch im allgemeinen nicht beeinträchtigt. Im Gegensatz zu Phenol/Formaldehyd-Harzverleimten Platten treten bei den erfindungsgemäß hergestellten Werkstoffen dabei vorteilhafterweise weder Salzausblühungen noch "Ausbluten" ein.

Bedingt durch die hohe Klebkraft der erfindungsgemäß einzusetzenden Bindemittel neigen die hiermit imprägnierten bzw. gebundenen Formkörper dazu, an den Oberflächen der heißen Pressen oder Formen zu haften. Dies kann durch Trennmittel, welche man dem Bindemittel zusetzt, vermieden werden. Eine andere Lösung besteht darin, die Trennmittel in reiner Form oder als Lösung auf die mit den Preßlingen in Berührung kommenden metallischen Oberflächen oder die Formlingsoberfläche aufzubringen. Als Trennmittel kommen hierbei alle bisher zu diesem Zweck vorgeschlagenen Substanzen in Frage. Bevorzugt sind jedoch gemäß DE-OS 2 325 926 Verbindungen, welche bei Isocyanaten eine Isocyanuratbildung katalysieren, beispielsweise Phenol-Mannichbasen, Derivate des Hexahydrotriazins oder Alkalisalze von Carbonsäuren. Wie schon mehrfach erwähnt, können mit den erfindungsgemäß zu verwendenden Bindemittelkombinationen im Vergleich zu herkömmlichen Bindemitteln auf Basis von Phenol/Formaldehydoder Harnstoff/Formaldehyd-Harzen bei der Spanplattenherstellung wesentliche Verbesserungen, sowohl im Hinblick auf die mechanischen Eigenschaften als auch in verfahrenstechnischer Hinsicht, erzielt werden.

So ist es im Falle von Holzspanplatten möglich, entweder bei gleicher Bindemittelmenge wie bei Phenol/Formaldehydbzw. Harnstoff/Formaldehyd-Harzen eine um 30 bis 50 % erhöhte Biegesteifigkeit (neben einer Verbesserung anderer mechanischer Eigenschaften) oder aber bei einer um 25 bis 70 % erniedrigten Bindemittelkonzentration ein gleiches mechanisches Eigenschaftsbild zu erreichen.

In allen beschriebenen Varianten des erfindungsgemäßen Verfahrens können die denaturierten Biomassen auch in beliebigen Mengenverhältnissen, z.B. 90:10 bis 10:90, zusammen mit Azulminsäuren in pulverisierter Form eingesetzt werden.

Die folgenden Beispiele erläutern das erfindungsgemäße Verfahren. Wenn nicht anders vermerkt, sind Mengenangaben als Gewichtsteile bzw. Gewichtsprozente zu verstehen.

## Beispiel 1

### a) Herstellung eines Biomassen-Polyadditionsprodukts

100 Teile eines getrockneten, aus einer Kläranlage stammenden, übel riechenden Klärschlammpulvers mit einem Glührückstand von 8,5 % werden mit Hilfe einer Luftstrahlmühle auf eine mittlere Teilchengröße von 20 μm gemahlen und in einer Rührapparatur mit 50 Teilen einer 30 %igen, toluolischen Lösung eines Toluylendiisocyanat-Isomerengemisches (2,4-, 2,6-Isomerenverhältnis = 65:35) versetzt und durch allmähliche Steigerung der Temperatur bis 110° C die Reaktion der H-aciden Gruppen der feinteiligen Biomassen mit den Isocyanatgruppen innerhalb von 60 Minuten durchgeführt.

Nach dem Abkühlen wird das suspendierte Reaktionsprodukt abgenutscht, mit wenig Aceton zweimal gewaschen und auf Blechen im Heizschrank bei 120° C unter reduziertem Druck getrocknet.

Man erhält ein sehr feinteiliges Klärschlamm-Isocyanat-Polyaddukt in Form eines Pulvers, das geruchsfrei und steriliert ist.

### b) Herstellung eines freie NCO-Gruppen aufweisenden Polyaddukts

Man verfährt wie in Beispiel 1a), verwendet aber die doppelte Menge Toluylendiisocyanat-Isomerengemisch, 50 %ig in wasserfreiem Toluol gelöst. Nach Entfernung des Lösungsmittels erhält man ein feinteiliges, geruchloses Klärschlamm-Polyaddukt, das zwar frei von monomerem Toluylendiisocyanat ist, aber 9,3 Gew.-% an die Biomasse gebundene freie Isocyanatgruppen enthält.

### c) Erfindungsgemäßes Verfahren

Herstellung von PUR-Weichschäumen aus den nach den gemäß Beispiel 1a) und 1b) modifizierten Klärschlamm-Pulvern. Jeweils 60 Teile der sehr feinpulvrigen, geruchlosen Klärschlamm-Polyaddukte werden in 160 Teilen eines auf Trimethylolpropan gestarteten Polyethers aus Propylenoxid und Ethylenoxid (OH-Zahl: 34; ca. 80 Mol-% primäre OH-Gruppen) durch intensives Einrühren bei Raumtemperatur suspendiert; dann werden nacheinander zugefügt:
  6,0 Teile Wasser,
  0,4 Teile Triethylendiamin,
  0,6 Teile 2-Dimethylaminoethanol,
  2,0 Teile eines handelsüblichen Polysiloxan-Schaumstabilisators (OS 15 der Bayer AG) und
  0,4 Teile Zinn-(II)-octoat.
In diese Mischung werden eingerührt 72 (bzw. 65) Teile Toluylendiisocyanat (2,4-, 2,6-Isomerenverhältnis: 70:30).

Nach jeweils 10 bis 12 Sekunden Steigzeit wird das Reaktionsgemisch cremeartig. Die Steigzeit der Schäume beträgt 70 bis 85 Sekunden, die Abbindezeit 130 bis 150 Sekunden.

Die ausreagierten Schaumstoffe sind völlig geruchsfrei und besitzen folgende mechanische Eigenschaften:
  1a) 1b)
  Rohdichte (DIN 53420) 35 34 kg/m$^3$
  Zugfestigkeit (DIN 53571) 167 163 KPa
  Bruchdehnung (DIN 53571) 175 182 %
  Stauchhärte (DIN 53577) 6,1 5,9 KPa
Im Vergleich dazu hat ein analog hergestellter Weichschaumstoff mit dem nicht mit Isocyanat modifizierten feingemahlenen Klärschlammpulver einen unangenehmen Geruch, der eine Verwendung in der Praxis ausschließt.

Ein im Vergleichsversuch hergestellter Weichschaum ohne Klärschlamm oder Klärschlamm-Polyaddukt hat eine um 18 bis 21 % geringere Stauchhärte und kein so günstiges Brandverhalten.

## Beispiel 2

### a) Herstellung einer 40 %igen Dispersion von Belebtschlamm-TDI-Rückstands-Polyaddukten in Rizinusöl

### Rezeptur:

200 Teile Belebtschlammpulver wie in Beispiel 1, mittlere Teilchengröße 20 μm,
200 Teile TDI-Rückstandspulver, mittlere Teilchengröße 5 μm, NCO-Gehalt: 8,4 Gew.-%, das bei großtechnischer Produktion von 2,4-, 2,6-Toluylendiisocyanat (Isomerengemisch 80:20) zwangsweise nach der Denaturierung mit Wasser angefallen ist und anschließend durch Trockenmahlung in einer Luftstrahlmühle sehr feinteilig vermahlen wurde,
11 Teile Ethanolamin,

6 Teile Hydrazin-Monohydrat,
643 Teile Rizinusöl.

Die Reaktion erfolt in einer Rührapparatur bei 80 bis 100°C, indem in das vorgelegt Rizinusöl die genannten Belebtschlamm- und TDI-Rückstandspulver eingerührt und das Ethanolamin/Hydrazin-Gemisch zugetropft wurden.

Nach 40 bis 60 Minuten ist kein freies Isocyanat mehr nachzuweisen.

Die sedimentationsstabile Dispersion hat 40 (20) %ig eine Viskosität von 4.590 (1.240) mPas und ist beliebig lagerfähig.

## b) Erfindungsgemäße Herstellung einer flexiblen Polyurethan-Folie

710 Teile der obigen Dispersion
80 Teile eines analog zu a) erhaltenen TDI-Rückstandes, mittlere Teilchengröße 10 μm, NCO-Gehalt = 13,9 Gew.-%,
108 Teile Rizinusöl und
80 Teile Ethylacetat
werden wie unter a) beschrieben zur Reaktion gebracht und das Ethylacetat abdestilliert.

Pro 100 Teile dieser Dispersion wurden 33 Teile eines flüssigen, technischen Diphenylmethandiisocyanats (NCO-Gehalt = 30 %) intensiv eingerührt und das Reaktionsgemisch auf eine glatte Unterlage (Glas oder Stahlband) in einer Schichtdicke von 0,5 mm aufgerakelt und in einem Heizschrank oder Trockenkanal bei Temperaturen von 120 bis 160°C zur Reaktion gebracht.

Die glänzende, sehr glatte Folie ist geruchlos und hat folgende physikalische Eigenschaften:
Reißfestigkeit 18,3 MPa
Reißdehnung 85 %
Weiterreißwiderstand 174 N/cm
Shore A-Härte 20

Beim Vergleichsversuch mit der gleichen Rezeptur, jedoch ohne Belebtschlamm-Polyaddukt erhält man lediglich einen zerfließenden Film ohne brauchbare Festigkeit.

Die erfindungsgemäße Reaktionsmischung von Beispiel 2b) hat bei Raumtemperatur eine Topfzeit von ca. 60 Minuten und kann auch als Klebstoff mit ausgezeichneten Eigenschaften eingesetzt werden.

## Patentansprüche:

1. Verwendung von reaktiven organischen Füllstoffen bei der Herstellung von gegebenenfalls zellförmigen Polyurethankunststoffen durch Polyaddition von
A) Polyisocyanaten
B) niedermolekularen und/oder höhermolekularen Verbindungen mit gegenüber Isocyanaten reaktiven Wasserstoffatomen, in Gegenwart von
C) reaktiven, organischen Füllstoffen wie gegebenenfalls
D) Treibmitteln, Katalysatoren und weiteren an sich bekannten Zusatzstoffen,
dadurch gekennzeichnet, daß
als Komponente C) Biomassen auf Basis von Mikroorganismen sowie deren Folge- bzw. Zersetzungsprodukte, die in einem getrennten Schritt durch Umsetzung mit Isocyanaten denaturiert wurden, erst in irreversibel denaturierter und geruchsfrei gemachter, modifizierter Form als Füllstoffe verwendet werden,
und als Komponente B) niedermolekulare Verbindungen mit mindestens 2, gegenüber Isocyanaten reaktionsfähigen Wasserstoffatomen und einem Molekulargewicht von 32-400 und/oder höhermolekulare Verbindungen, mit 2 bis 8, gegenüber Isocyanaten reaktionsfähigen Wasserstoffatomen, vom Molekulargewicht 500 bis 8.000, eingesetzt werden.

2. Verwendung nach Anspruch 1, dadurch gekennzeichnet, daß Biomassen eingesetzt werden, welche denaturiert worden sind, indem man
a) 5 bis 98 Gew.-%, bezogen auf a) + b), der Biomasse mit
b) 95 bis 2 Gew.-%, bevorzugt 80 bie 3 Gew.-%, bezogen auf a) + b), einer Isocyanatgruppen aufweisenden Verbindung, gegebenenfalls in Gegenwart von
c) Wasser und/oder einem organischen Lösungsmittel sowie gegebenenfalls in Gegenwart von
d) organischen und/oder anorganischen Zusatzstoffen bei Temperaturen oberhalb von 50°C umgesetzt hat.

3. Verwendung nach Ansprüchen 1 und 2, dadurch gekennzeichnet, daß Komponente C) freie Isocyanatgruppen enthält.

4. Verwendung nach Ansprüchen 1 bis 3, dadurch gekennzeichnet, daß Komponente C) in Form einer Dispersion in Komponente B) eingesetzt wird.

5. Verwendung nach Ansprüchen 1 bis 4, dadurch gekennzeichnet, daß als zusätzlicher reaktiver Füllstoff lignocellulosehaltige Materialien eingesetzt werden.

## Claims

1. Use of reactive organic fillers in the production of optionally cellular polyurethane plastics by the polyaddition of
A) polyisocyanates,
B) low molecular weight and/or relatively high molecular weight compounds containing hydrogen atoms which are reactive towards isocyanates, in the presence of
C) reactive organic fillers and optionally
D) blowing agents, catalysts and other additives known per se, characterised in that biomasses based on microorganisms and sequential products or decomposition products thereof, which have been denatured in a separate step by reaction with isocyanates, are used as fillers, as component C), only after they have been irreversibly denatured and deodourised, and modified, and low molecular weight compounds containing at least 2 hydrogen atoms which are reactive towards isocyanates and having a molecular weight of 32-400 and/or relatively high molecular weight compounds containing 2 to 8 hydrogen atoms which are reactive towards isocyanates and having a molecular weight of 500 to 8,000 are used as component 8).

2. Use according to Claim 1, characterised in that biomasses are used which have been denatured by reacting

a) 5 to 98% by weight, based on a) + b), of the biomass with

b) 95 to 2% by weight, preferably 80 to 3% by weight, based on

a) + b), of a compound containing isocyanate groups, optionally in the presence of

c) water and/or an organic solvent and optionally in the presence of

d) organic and/or inorganic additives, at temperatures above 50°C.

3. Use according to Claims 1 and 2, characterised in that component C) contains free isocyanate groups.

4. Use according to Claims 1 to 3, characterised in that component C) is used in the form of a dispersion in component B).

5. Use according to Claims 1 to 4, characterised in that lignocellulose-containing materials are used as the additional reactive filler.

**Revendications**

7. Utilisation de charges organiques réactives dans la production de matières plastiques du type polyuréthanne éventuellement cellulaires par polyaddition de

A) polyisocyanates

B) composés de bas poids moléculaire et/ou de poids moléculaire élevé présentant des atomes d'hydrogène réactifs envers des isocyanates, en présence

C) de charges organiques réactives ainsi que, le cas échéant,

D) d'agents porogènes, de catalyseurs et d'autres additifs connus,

caractérisée en ce que

on utilise comme composant C), en tant que charges, uniquement sous une forme modifiée, dénaturée de façon irréversible et rendue inodore, des biomasses à base de micro-organismes ainsi que leurs dérivés et leurs produits de décomposition qui ont été dénaturés par réaction avec des isocyanates dans une étape séparée, et on utilise comme composant B) des composés de bas poids moléculaire ayant au moins 2 atomes d'hydrogène aptes à réagir vis-à-vis d'isocyanates et d'un poids moléculaire de 32 à 400 et/ou des composés de poids moléculaire élevé ayant 2 à 8 atomes d'hydrogène aptes à réagir vis-à-vis d'isocyanates, d'un poids moléculaire de 500 à 8000.

2. Utilisation suivant la revendication 7, caractérisée en ce qu'on met en jeu des biomasses qui ont été dénaturées par le fait qu'on a fait réagir

a) 5 à 98 % en poids, par rapport à a) + b), de la biomasse avec

b) 95 à 2 % en poids, de préférence 80 à 3 % en poids, par rapport à a) + b), d'un composé porteur de groupes isocyanate, éventuellement en présence c) d'eau et/ou d'un solvant organique ainsi que, le cas échéant, en présence

d) d'additifs organiques et/ou inorganiques à des températures au-dessus de 50°C.

3. Utilisation suivant les revendications 7 et 2, caractérisée en ce que le composant C) contient des groupes isocyanate libres.

4. Utilisation suivant les revendications 7 à 3, caractérisée en ce qu'on met en jeu le composant C) sous la forme d'une dispersion dans le composant B).

5. Utilisation suivant les revendications 7 à 4, caractérisée en ce qu'on met en jeu des matières contenant de la lignocellulose en tant que charge réactive additionnelle.